# EUROPEAN PATENT SPECIFICATION

(11) **EP 3 145 730 B1**
(45) Date of publication and mention of the grant of the patent: **08.07.2020**
(21) Application number: 15720095.7
(22) Date of filing: 06.05.2015
(51) Int. Cl.: B60C 11/12

(54) **TIRE PROFILE AND MOLDING FORM**
REIFENPROFIL UND GIESSFORM
PROFIL DE PNEU ET FORME DE MOULAGE

(30) Priority: 20.05.2014 GB 201408942
(43) Date of publication of application: 29.03.2017
(73) Proprietor: Apollo Tyres Global R&D B.V., 7521 PT Enschede (NL)
(72) Inventor: SANKAR, Muthu Siva, NL-7521 PT Enschede (NL)
(74) Representative: Michalski Hüttermann & Partner Patentanwälte mbB
(86) International application number: PCT/EP2015/059959
(87) International publication number: WO 2015/176958

(56) References cited:
- EP-A1- 2 821 258
- EP-A2- 0 952 011
- EP-A2- 1 555 142
- WO-A1-2012/001488

## Description

The invention relates to a tire profile and a molding form for a pneumatic tire of an automobile, by means of which the automobile can be driven along an underground.

From US 7,487,810 B2 a pneumatic tire is known comprising a plurality of sipes in a tread portion of a tire profile for providing a better grip of the tire on the underground at winter conditions. The sipes comprise a zig-zag extension in a width direction mainly parallel to a turning axis of the tire. The sipes further comprises a zig-zag extension in radial direction. Each sipe comprises in radial direction a first portion connected to a second portion by a smaller first angle and third portion connected to the second portion via a broader second angle, wherein the first angle and the second angle are constant along the zig-zag extension in width direction for each separate sipe.

WO 2012/001488 A1 describes a tread of a tire comprising sipes with a laterally protruding dove tail like ridge. The ridge comprises two inclined portions connected via an angle which changes along width direction.

EP 1 55 142 A2 describes a tire with sipes comprising straight parts arranged in a zig-zag manner in width direction and straight portions arranged in a zig-zag manner in radial direction.

EP 2 821 158 A1 describes a tire with sinusoidal sipes comprising a continuous transition between different inclined portions in radial direction.

There is a permanent need providing a tire with a good grip to an underground.

It is an object of the invention providing a tire with a good grip to an underground.

The object is accomplished by a tire profile according to claim 1 as well as a sipe blade according to claim 17. Preferred embodiments of the invention are given by the dependent claims, which can constitute each solely or in combination an aspect of the invention.

According to the invention it is provided a tire profile of a pneumatic tire of an automobile, said tire profile comprising a tread portion comprising at least one sipe, the sipe comprising an extension in a width direction and a depth in a radial direction, wherein the sipe comprises a first portion, a second portion arranged radially inward of the first portion and at least one further portion, wherein the further portion is connected to a portion arranged above the further portion in the radial direction by at their connecting line, wherein the sipe comprises a first part, a second part arranged directly besides the first part in the width direction and at least one third part directly besides, i. e. adjacent to, the second part in the width direction, the first part is inclined to the width direction by an acute angle β₁, the second part is inclined to the width direction by an acute angle β₂ different to β₁ and the third part is inclined to the width direction by an acute angle β₃ different to β₁ and different to β₂, wherein the mathematical values of β₁ and β₂ are both positive or negative along at leat a part of the radial direction and/or the mathematical values of β₂ and β₃ are both positive or negative along at least a part of the radial direction, wherein the first part and the second part are inclined to each other along their connecting line by an angle η₁, wherein the second part and the third part are inclined to each other along their connecting line by an angle η₂, wherein the angle η₁ and/or the angle η₂ changes along the width direction continuously in a range of 90° ≤ η₁ ≤ 300° and/or in a range of 90° ≤ η₂ ≤ 300°. Particularly the first portion is inclined to the radial direction by an acute angle α₁, the second portion is inclined to the radial direction by an acute angle α₂ different to α₁ and the further portion is inclined to the radial direction by an acute angle αₓ different to α₁ and different to α₂, wherein the mathematical values of α₁ and α₂ are both positive or negative at least partially along the width direction and/or the mathematical values of α₂ and αₓ are both positive or negative at least partially along the width direction. β₂ is not positive and negative at the same time. α₂ is not positive and negative at the same time.

Due to the sipes an irregular formed slit inside the tire profile may be provided so that the edges of rubber blocks between two subsequent sipes may dig into a snowy or icy surface and/or through a fluid film on a road at bad weather conditions. This leads to a good grip of a tire with such kind of a tire profile even on low friction surfaces. At the same time a high stiffness of the tire profile and a good dry road performance is provided. Due to the same mathematical value of subsequent portions or parts of the sipe in radial direction and/or width direction the inclination changes at its respective connection line but not the orientation with respect the radial direction or width direction. The sipe is not straight and may comprise a non-zig-zag extension in radial direction and/or in width direction. The form of the sipe may differ both from a straight as well as from a pure zig-zag course in radial direction and/or in width direction, wherein the sipe may comprise a zig-zag course in one direction and/or only partially in radial direction and/or in width direction. By means of this form of the sipe a protrusion and a corresponding depression is formed in adjacent blocks of the tire profile spaced by the sipe, wherein one bigger and one smaller protrusion/depression can be formed one after the other in radial direction and/or in width direction. Due to the change of the inclination of the bigger protrusion/depression the bigger protrusion can be blocked at the tip of the protrusion inside the bigger depression leading to an increased stiffness under a lower load and may be further blocked at the side faces at a higher load, wherein the smaller protrusion/depression may block at a further different load. Due to the design of the smaller and bigger protrusion/depression of the blocks defined by the form of the sipes the stiffness of tire may be different in dependence of the applied load. This enables a tire which comprises a low stiffness at low load, like normal straight forward drive of the automobile, leading to a low wear. At the same time the tire may comprise a high stiffness at high load, like during a braking situation or cornering, leading to a good grip to the underground. Particularly bigger and smaller protrusion/depression are arranged alternatively in radial direction and in width direction so that the bigger protrusion/depression may block with each other in a direction inclined to the radial direction as well as to the width direction leading a high stiffness at high load. Due to the same mathematical value of subsequent portions or parts of the sipe in radial direction and/or width direction bigger and smaller protrusion/depression of adjacent blocks spaced to each other by the sipe are provided leading to a high stiffness, particularly at high load, and a low wear.

The sipes extends usually only along a part of the width of a tire. If so, the width direction of the sipe may be inclined with respect to an axial direction of a tire comprising the tire profile. Particularly the inclination of the width direction to the axial direction is less than 45°, particularly less than 30°, preferably less than 15° and particularly preferred less than 5°. Further it is possible that the width direction is mainly parallel to the axial direction of the tire and/or the turning axis of the tire. When the sipe is straight in width direction the sipe extends along the width direction. When the sipe is not straight but curved, zig-zag-formed or else formed the width direction is the best fit straight line to the form of the sipe in top view or parallel to this best fit straight line.

The angle between the second portion and the radial direction portion would be α₂, wherein, if so, the angle between the third portion and the radial direction would be α₃ and so on. The angle αₓ is the angle between the x portion and the radial direction, wherein x is a natural positive number. A feature regarding the relative arrangement of the first portion and the radial direction may also apply for the relative arrangement of other portions to the radial direction, wherein different portions may have the same or a different relative arrangement to the radial direction as explained elsewhere, when a specific design of a sipe is regarded. Different discussed features of the relative arrangement of portions to the radial direction may be combined in one sipe at different portions, even when only explained with respect to the first portion exemplary. Not every in radial direction subsequent arranged portions may provide a zig-zag course. Compared to a pure zig-zag course one portion of the pure zig-zag course may be constituted by two portions connected to each other via a connecting line by an angle γₓ, wherein these two portions are oriented in the same general orientation with a part in the forward running direction of the tire or against the forward running direction of the tire but with a different inclination to the radial direction by means of the different angles α.

The angle between the second part and the width direction would be β₂, wherein, if so, the angle between the third part and the width direction would be β₃ and so on. The angle βₓ is the angle between the x part and the width direction, wherein x is a natural positive number. A feature regarding the relative arrangement of the first part and the width direction may also apply for the relative arrangement of other parts to the width direction, wherein different parts may have the same or a different relative arrangement to the width direction as explained elsewhere, when a specific design of a sipe is regarded. Different discussed features of the relative arrangement of parts to the width direction may be combined in one sipe at different parts, even when only explained with respect to the first parts exemplary. Not every in width direction subsequent arranged parts may provide a zig-zag course. Compared to a pure zig-zag course one part of the pure zig-zag course may be constituted by two parts connected to each other via a connecting line by an angle ηₓ, wherein these two parts are oriented in the same general orientation with a part in the same axial direction of the tire or against this axial direction of the tire but with a different inclination to the width direction by means of the different angles β.

Particularly the first portion and the second portion are inclined to each other along their connecting line by an angle γ₁ and the further portion is inclined to the portion arranged above, i. e. adjacent to, the further portion by an angle γₓ, wherein the angle γ₁ and/or the angle γₓ changes along width direction continuously. Particularly the sipe comprises at least one further portion, wherein the further portion is connected to a portion arranged above the further portion in radial direction by a further connecting line and inclined to this portion by an angle γₓ, wherein the angle γₓ changes along width direction continuously. The angle between the second portion and the subsequent third portion would be γ₂, wherein, if so, the angle between the third portion and the subsequent forth portion would be γ₃ and so on. The angle γₓ is the angle between the x portion and the x+1 portion, wherein x is a natural positive number. A feature regarding the relative arrangement of the first portion and the second portion may also apply for the relative arrangement of other portions, wherein different portions may have the same or a different relative arrangement as explained elsewhere, when a specific design of a sipe is regarded. Different discussed features of the relative arrangement of portions may be combined in one sipe at different pairs of portions, even when only explained with respect to the first portion and the second portion exemplary. Due to the increased number of portions of the sipe the faces of the rubber blocks pointing to each other and defined by the form of the sipe become more irregular. Due to the irregular and more uneven faces of the adjacent blocks the blocks may easily engage each others so that the blocks may be interlocked increasing the stiffness of the tire profile.

Since the angle γ₁ between the first portion and the second portion of the sipe in radial direction is not constant or changes stepwise but changes continuously adjacent blocks spaced by the sipe may easily engage each other so that the blocks may be interlocked increasing the stiffness of the tire profile. This in turn increases the performance of the tire particularly regarding traction and/or in a breaking situation on a dry high friction surface. Further the wear resistance is increased due to a diminished slipping of the blocks. Due to the continuous change of the angle γ₁ between the first portion and the second portion a good grip and a high efficiency at low as well as at high friction surfaces can be provided so that a tire with a good grip to an underground is possible. In a side view to the tire at a radial cross sectional plane at a width where the sipes starts in width direction towards the middle radial plane of the tire the angle γ₁ is measured on the left side of the sipe, wherein the running surface of the tire profile points upwards at the regarded sipe. The sipe may comprises particularly partially a zig-zag course in radial direction this means that in radial direction an angle γ between adjacent portions of the sipes in radial directions may comprise an angle γ of less than 180° and more than 180° particularly in an alternating manner. Depending on the particularly design of the sipe the angle γ₁ between the first portion and the second portion may start with an value of less than 180° or more than 180°. The continuous change of the angle γ₁ may lead to an increasing or decreasing angle γ₁, wherein in a part in width direction the angle γ₁ may increase and in another part in width direction the angle γ₁ may decrease.

Particularly preferred the an amount of the change of γ₁ and at least one γₓ in width direction and/or the sign of the change of γ₁ and at least one γₓ along width direction is different. Particularly the amount of the change Δγ' of the respective angle γ is 0°/mm < Δγ' ≤ 105°/mm, particularly 5°/mm ≤ Δγ' ≤ 70°/mm, preferably 10°/mm ≤ Δγ' ≤ 60°/mm and particularly preferred 20°/mm ≤ Δγ' ≤ 40°/mm. The derivation of the angle γ to the path of the respective portion may be constant or may differ along the width direction. Due to this change of an angle γ sufficiently irregular surfaces of the opposing blocks may be provided for facilitating an engagement of the blocks with each others. The stiffness of the tire profile may be increased without affecting a good grip to an underground significantly.

Particularly at least one angle γ changes at least along a part of the extension of the sipe in the width direction in a range of 40° ≤ γ ≤ 300°, particularly 90° ≤ γ ≤ 270°, preferably 135° ≤ γ ≤ 225° and/or in a range of 40° ≤ γ ≤ 180°, particularly 90° ≤ γ ≤ 180°, preferably 135° ≤ γ ≤ 180°. A portion may be inclined to the radial direction by an acute angle α with a positive mathematical value, wherein the angle α may decrease to zero and increases again with a positive mathematical value to its maximum absolute value or decreases further with a negative mathematical value to its maximum absolute value. Similarly, a portion may be inclined to the radial direction by an acute angle α with a negative mathematical value, wherein the angle α may increase to zero and decreases again with a negative mathematical value to its maximum absolute value or increases further with a positive mathematical value to its maximum absolute value. Thus, the general orientation of a portion with an amount in forward running direction of the tire or against the forward running direction of the tire may stay or may change along the width direction. Due to this range for γ sufficient irregular surfaces of the blocks may be provided for facilitating an engagement of the blocks with each others. The stiffness of the tire profile may be increased without affecting a good grip to an underground significantly.

Preferably the absolute value of an acute angle at the connecting line between the first portion and the second portion and an acute angle at the connecting line between the second portion and the further portion is different at a discrete position in the width direction. There could be a situation where due to the forces applied to the tire profile an interlocking of adjacent blocks may occur at the value of γ₁ but not at the value of γₓ or the respective acute angle, wherein at a different situation with different forces applied to the tire profile an interlocking of adjacent blocks may occur at the value of γₓ but not at the value of γ₁. Hence, a sufficient stiffness can be provided at a plurality of different situations. This is based on the insight that due to the high flexibility of the rubber material of the tire profile different elastic deformation could occur at the faces of the blocks depending on different force profiles applied to the tire profile. The stiffness of the tire profile may be increased without affecting a good grip to an underground significantly.

Particularly a plurality of portions arranged one after another in the radial direction is provided, wherein one end of each portion is arranged on a basic line in the radial direction and the other end of each portion is arranged spaced to the basic line by an amplitude, wherein the amplitude is constant for each portion at at least one discrete position in the width direction and/or the amplitude is different for different portions at least partially in the width direction. A part with a low amplitude between parts with a high amplitude may form a kind of a pocket in one block into which a corresponding protrusion of the opposite block may protrude, wherein the ground of the pocket may be not even but irregular, particularly saw-toothed. This provides differently formed parts where an interlocking of the blocks spaced by the sipe may occur. The stiffness of the tire profile may be increased without affecting a good grip to an underground significantly.

Particularly preferred the sipe comprises a first part and a second part arranged besides the first part in width direction, wherein the first part and the second part are inclined to each other along a connecting line by an angle η₁ particularly for forming a zig-zag-extension in width direction, wherein the angle η₁ changes along radial direction continuously. Since the angle η₁ between the first part and the second part of a particularly zig-zag course of the sipe in width direction is not constant or changes stepwise but changes continuously adjacent blocks spaced by the sipe may easily engage each other so that the blocks may be interlocked increasing the stiffness of the tire profile. This in turn increases the performance of the tire particularly regarding traction and/or in a breaking situation on a dry high friction surface. Further the wear resistance is increased due to a diminished slipping of the blocks. Due to the continuous change of the angle η₁ between the first part and the second part a good grip and a high efficiency at low as well as at high friction surfaces can be provided so that a tire with a good grip to an underground is possible.

The angle between the second part and the subsequent third part would be η₂, wherein, if so, the angle between the third part and the subsequent forth part would be η₃ and so on. The angle ηₓ is the angle between the x part and the x+1 part, wherein x is a natural positive number. In a top view to the tire in radial direction from radial outwards towards the turning axis of the tire the angle η₁ is measured on the left side of the sipe. When the sipe comprises a zig-zag course in width direction this means that in width direction an angle η between adjacent parts of the sipes in width directions may comprise an angle η of less than 180° and more than 180° particularly in an alternating manner. Depending on the particularly design of the sipe the angle η₁ between the first part and the second part may start with an value of less than 180° or more than 180°. The continuous change of the angle η₁ may lead to an increasing or decreasing angle η₁, wherein in a part in radial direction the angle η₁ may increase and in another part in radial direction the angle η₁ may decrease. Preferably the first part is inclined to the width direction by an acute angle β₁ and the second part is inclined to the width direction by an acute angle β₂. The further part may be inclined to the width direction by an acute angle βₓ. The angle between the second part and the width direction would be β₂, wherein, if so, the angle between the third part and the width direction would be β₃ and so on. The angle βₓ is the angle between the x part and the width direction, wherein x is a natural positive number. The sipe may be designed similarly in width direction as in radial direction. The previously discussed embodiments regarding angle γ may apply also to angle η, respectively. The previously discussed embodiments regarding angle α may apply also to angle β, respectively.

Particularly preferred an amount of the change of the angle η₁ and at least one angle ηₓ in the width direction and/or the sign of the change of the angle η₁ and at least one angle ηₓ along the width direction is different. Particularly the amount of the change Δη' of the respective angle γ is 0°/mm < Δη' ≤ 105°/mm, particularly 5°/mm ≤ Δη' ≤ 70°/mm, preferably 10°/mm ≤ Δη' ≤ 60°/mm and particularly preferred 20°/mm ≤ Δη' ≤ 40°/mm. The derivation of the angle η to the path of the respective portion may be constant or may differ along the width direction. Due to this change of an angle η sufficiently irregular surfaces of the opposing blocks may be provided for facilitating an engagement of the blocks with each others. The stiffness of the tire profile may be increased without affecting a good grip to an underground significantly. Particularly at least one angle η changes at least along a part of the extension of the sipe in width direction in a range of 40° ≤ η ≤ 300°, particularly 90° ≤ η ≤ 270°, preferably 135° ≤ η ≤ 225° and/or in a range of 40° ≤ η ≤ 180°, particularly 90° ≤ η ≤ 180°, preferably 135° ≤ η ≤ 180°.

Preferably the absolute value of an acute angle at the connecting line between the first part and the second part and an acute angle at the connecting line between the second part and the third part is different at a discrete position in the radial direction. There could be a situation where due to the forces applied to the tire profile an interlocking of adjacent blocks may occur at the value of η₁ but not at the value of ηₓ or the respective acute angle, wherein at a different situation with different forces applied to the tire profile an interlocking of adjacent blocks may occur at the value of ηₓ but not at the value of η₁. Hence, a sufficient stiffness can be provided at a plurality of different situations. This is based on the insight that due to the high flexibility of the rubber material of the tire profile different elastic deformation could occur at the faces of the blocks depending on different force profiles applied to the tire profile. The stiffness of the tire profile may be increased without affecting a good grip to an underground significantly.

Particularly a plurality of parts arranged one after another in the width direction is provided, wherein one end of each part is arranged on a basic line in the width direction and the other end of each part is arranged spaced to the basic line by an amplitude, wherein the amplitude is constant for each part at at least one discrete position in the radial direction and/or the amplitude is different for different parts at least partially in the radial direction. The parts may comprise a only positive or only negative amplitude with respect to the base line at different discrete positions in radial direction. The amplitude of the different parts may form a depression into which a corresponding protrusion may reach. Due to the changing amplitude of the part of the sipe the adjacent blocks may easily engage each others so that the blocks may be interlocked increasing the stiffness of the tire profile. The stiffness of the tire profile may be increased without affecting a good grip to an underground significantly.

Preferably a plurality of parts arranged one after another in the width direction is provided, wherein one end of each part is arranged on a basic line in the width direction and the other end of each part is arranged spaced to the basic line by an amplitude, wherein over at least one height in the radial direction the amplitude protrudes in one circumferential direction and in at least one other height in the radial direction in an opposite circumferential direction for at least a part of the parts. Particularly a zig-zag course of the sipe in width direction may follow a zig-zag path in radial direction oscillating around the base line. The may comprise a positive as well as negative amplitude with respect to the base line at different discrete positions in radial direction. Due to the changing amplitude of the parts of the sipe the faces of the rubber blocks pointing to each other and defined by the form of the sipe become more irregular. Due to the irregular and more uneven faces of the adjacent blocks the blocks may easily engage each others so that the blocks may be interlocked increasing the stiffness of the tire profile.

Particularly preferred the sipe comprises a mainly constant gap thickness along the width direction and along the radial direction in an unstressed state. The gab thickness mainly in circumferential direction is particularly 0.4 mm to 1.0 mm. Due to the constant gab thickness the performance of tire profile may stay mainly constant at a different amount of wear of the tire profile.

Particularly the first portion comprises a height h₁ in the radial direction, the second portion comprises a height h₂ in the radial direction and, if so, the further portion comprises a height hₓ in the radial direction, wherein the heights h₁, h₂ and/or hₓ are mainly constant along the width direction. The height of the second portion would be h₂, wherein, if so, the height of the third portion would be h₃ and so on. The height hₓ is the height of the x portion, wherein x is a natural positive number. The heights of different portions may be the same or different. When the respective portion of the sipe is inclined by a larger angle α to the radial direction the length of the portion at this discrete position in width direction is greater than at a different discrete position in width direction, where the sipe is inclined by a smaller angle α to the radial direction.

Preferably the tread portion comprises a first block providing a first running surface at its radially outer end and a second block providing a second running surface at its radially outer end, wherein the first block is arranged at a distance to the second block by the sipe, wherein the first block forms a depression opened towards the second block, wherein the second block forms a protrusion protruding partially into the depression of the first block. The design of the sipe may be such that for example by a partial zig-zag course in width direction as well as in radial direction a mainly cone-shaped or pyramid-shaped protrusion pointing from the first block to the second block or vice versa is provided. This protrusion may comprise an extension mainly perpendicular to the width direction which is large enough for protruding into a correspondingly shaped depression of the respective other block. Due to the protrusion partially inside the corresponding depression the adjacent blocks may easily engage each others so that the blocks may be interlocked increasing the stiffness of the tire profile. The stiffness of the tire profile may be increased without affecting a good grip to an underground significantly.

The invention further relates to a pneumatic tire for an automobile comprising a connecting part for being connected to a tire rim of a wheel of the automobile and a tire profile which may be designed as previously described for running the automobile along an underground. The tire may be further designed as aforesaid described. Due to the same mathematical value of subsequent portions or parts of the sipe in radial direction and/or width direction bigger and smaller protrusion/depression of adjacent blocks spaced to each other by the sipe are provided leading to a high stiffness, particularly at high load, and a low wear.

Particularly the tire comprises a plurality of tire profiles arranged at discrete areas at the circumferential area of the tire, wherein at least a part of the tire profiles may be formed differently to each others with respect to the form and/or inclination and/or orientation of the sipes, preferably depending on the distance of a discrete tire profile to the middle radial plane of the tire. Particularly the tire is mainly symmetric with respect to the middle radial plane of the tire.

The invention further relates to a wheel for an automobile, said wheel comprising a tire rim for being connected to an axle of the automobile and a pneumatic tire which may be designed as previously described connected to the tire rim. The wheel may be further designed as aforesaid described. Due to the same mathematical value of subsequent portions or parts of the sipe in radial direction and/or width direction bigger and smaller protrusion/depression of adjacent blocks spaced to each other by the sipe are provided leading to a high stiffness, particularly at high load, and a low wear.

The invention further relates to a sipe blade for a molding form for vulcanizing a green tire to become a tire comprising a tire profile which may be designed as previously described, said sipe blade comprising a first blade portion forming a first portion of a sipe extending mainly in the radial direction of the tire, a second blade portion forming a second portion of the sipe connected to the first portion radially inward of the first portion, a third blade portion forming a further portion of the sipe connected to the first portion radially inward of the second portion, wherein the first blade portion, the second blade portion and the third blade portion form a first blade part forming a first part of the sipe extending mainly in the width direction, a second blade part forming a second part of the sipe extending mainly in the width direction of the tire, wherein the second blade part is connected to the first blade part, and a third blade part forming a third part of the sipe extending mainly in the width direction, wherein the third blade part is connected to the second blade part, wherein the first blade part is inclined to the width direction by an acute angle β_{1'}, the second blade part is inclined to the width direction by an acute angle β_{2'} different to β_{1'} and the third blade part is inclined to the width direction by an acute angle β_{3'} different to β_{1'} and different to β_{2'}, wherein the mathematical values of β_{1'} and β_{2'} are both positive or negative at least partially along the radial direction and/or the mathematical values οf β_{2'} and β_{3'} are both positive or negative at least partially along the radial direction, wherein the first blade portion and the second blade are designed such that the first part and the second part are inclined to each other along their connecting line by an angle η₁, wherein the second part and the third part are inclined to each other along their connecting line by an angle η₂, wherein the angle η₁ and/or the angle η₂ changes along the width direction continuously in a range of 90° ≤ η₁ ≤ 300° and/or in a range of 90° ≤ η₂ ≤ 300°. Particularly the angles α_{1'}, α_{2'}, a_{x'}, β_{1'}, β_{2'}, and/or β_{3'} are chosen such that under consideration of a shrinking of the rubber material the afore mentioned angles α₁, α₂, αₓ, β₁, β₂, and/or β₃ are realized in the finished tire profile particularly after a vulcanization and cooling process applied to the tire profile. Particularly the first blade portion is inclined to the radial direction by an acute angle α₁, the second blade portion is inclined to the radial direction by an acute angle α₂ different to α_{1'} and the third blade portion is inclined to the radial direction by an acute angle a_{x'} different to α_{1'} and different to α_{2'}, wherein the mathematical values of α_{1'} and α₂ are both positive or negative at least partially along width direction and/or the mathematical values of α₂ and a_{x'} are both positive or negative at least a partially along width direction. Due to the same mathematical value of subsequent portions or parts of the sipe provided by the respective sipe blade in radial direction and/or width direction bigger and smaller protrusion/depression of adjacent blocks spaced to each other by the sipe are provided leading to a high stiffness, particularly at high load, and a low wear.

The invention further relates to a molding form for vulcanizing a green tire to become a tire, said molding form comprising a tire profile which may be designed as previously described, comprising a mold casing for receiving a rubber material and at least one sipe blade which may be designed as previously described protruding radially inwards from the mold casing forming sipes into the rubber material. The molding form may be further designed as aforesaid described. Due to the same mathematical value of subsequent portions or parts of the sipe provided by the respective sipe blade in radial direction and/or width direction bigger and smaller protrusion/depression of adjacent blocks spaced to each other by the sipe are provided leading to a high stiffness, particularly at high load, and a low wear.

In the following the invention is explained in detail by example with reference to the enclosed drawings showing preferred embodiments of the present invention, wherein each feature can constitute solely or in combination an aspect of the invention. In the drawings:
Fig. 1: is a schematic perspective view of a tire for a wheel of an automobile,
Fig. 2: is a schematic cut sectional side view of a tire profile of the tire illustrated in Fig. 1,
Fig. 3: is a schematic cut sectional top view of a first embodiment of a tire profile along line A-A of Fig. 1,
Fig. 4: is a schematic cut sectional top view of the first embodiment of the tire profile along line B-B of Fig. 1,
Fig. 5: is a schematic cut sectional top view of the first embodiment of the tire profile along line C-C of Fig. 1,
Fig. 6: is a schematic cut sectional top view of the first embodiment of the tire profile along line D-D of Fig. 1,
Fig. 7: is a schematic cut sectional side view of the first embodiment of the tire profile along line E-E of Fig. 3,
Fig. 8: is a schematic cut sectional side view of the first embodiment of the tire profile along line F-F of Fig. 3,
Fig. 9: is a schematic perspective isometric view of the first embodiment as illustrated in Fig. 3 to Fig. 8,
Fig. 10: is a schematic cut sectional top view of a second embodiment of a tire profile along line A-A of Fig. 1,
Fig. 11: is a schematic cut sectional top view of the second embodiment of the tire profile along line B-B of Fig. 1,
Fig. 12: is a schematic cut sectional top view of the second embodiment of the tire profile along line C-C of Fig. 1,
Fig. 13: is a schematic cut sectional top view of the second embodiment of the tire profile along line D-D of Fig. 1,
Fig. 14: is a schematic cut sectional side view of the second embodiment of the tire profile along line E-E of Fig. 10,
Fig. 15: is a schematic cut sectional side view of the second embodiment of the tire profile along line F-F of Fig. 10,
Fig. 16: is a schematic cut sectional side view of the second embodiment of the tire profile along line G-G of Fig. 10,
Fig. 17: is a schematic perspective isometric view of the second embodiment as illustrated in Fig. 10 to Fig. 16,
Fig. 18: is a schematic cut sectional top view of a third embodiment of a tire profile along line A-A of Fig. 1,
Fig. 19: is a schematic cut sectional top view of the third embodiment of the tire profile along line B-B of Fig. 1,
Fig. 20: is a schematic cut sectional top view of the third embodiment of the tire profile along line C-C of Fig. 1,
Fig. 21: is a schematic cut sectional top view of the third embodiment of the tire profile along line D-D of Fig. 1,
Fig. 22: is a schematic cut sectional side view of the third embodiment of the tire profile along line E-E of Fig. 18,
Fig. 23: is a schematic cut sectional side view of the third embodiment of the tire profile along line F-F of Fig. 18,
Fig. 24: is a schematic perspective isometric view of the third embodiment as illustrated in Fig. 18 to Fig. 23,
Fig. 25: is a schematic cut sectional top view of a forth embodiment of a tire profile along line A-A of Fig. 1,
Fig. 26: is a schematic cut sectional top view of the forth embodiment of the tire profile along line B-B of Fig. 1,
Fig. 27: is a schematic cut sectional top view of the forth embodiment of the tire profile along line C-C of Fig. 1,
Fig. 28: is a schematic cut sectional top view of the forth embodiment of the tire profile along line D-D of Fig. 1,
Fig. 29: is a schematic cut sectional side view of the forth embodiment of the tire profile along line E-E of Fig. 25,
Fig. 30: is a schematic cut sectional side view of the forth embodiment of the tire profile along line F-F of Fig. 25,
Fig. 31: is a schematic perspective isometric view of the forth embodiment as illustrated in Fig. 25 to Fig. 30,
Fig. 32: is a schematic cut sectional top view of a fifth embodiment of a tire profile along line A-A of Fig. 1,
Fig. 33: is a schematic cut sectional top view of the fifth embodiment of the tire profile along line B-B of Fig. 1,
Fig. 34: is a schematic cut sectional top view of the fifth embodiment of the tire profile along line C-C of Fig. 1,
Fig. 35: is a schematic cut sectional top view of the fifth embodiment of the tire profile along line D-D of Fig. 1,
Fig. 36: is a schematic cut sectional side view of the fifth embodiment of the tire profile along line E-E of Fig. 32,
Fig. 37: is a schematic cut sectional side view of the fifth embodiment of the tire profile along line F-F of Fig. 32,
Fig. 38: is a schematic perspective isometric view of the forth embodiment as illustrated in Fig. 32 to Fig. 37,
Fig. 39: is a schematic cut sectional top view of a sixth embodiment of a tire profile along line A-A of Fig. 1,
Fig. 40: is a schematic cut sectional top view of the sixth embodiment of the tire profile along line B-B of Fig. 1,
Fig. 41: is a schematic cut sectional top view of the sixth embodiment of the tire profile along line C-C of Fig. 1,
Fig. 42: is a schematic cut sectional top view of the sixth embodiment of the tire profile along line D-D of Fig. 1,
Fig. 43: is a schematic cut sectional side view of the sixth embodiment of the tire profile along line E-E of Fig. 39,
Fig. 44: is a schematic cut sectional side view of the sixth embodiment of the tire profile along line F-F of Fig. 39,
Fig. 45: is a schematic cut sectional side view of the sixth embodiment of the tire profile along line G-G of Fig. 39,
Fig. 46: is a schematic cut sectional top view of a seventh embodiment of a tire profile along line A-A of Fig. 1,
Fig. 47: is a schematic cut sectional top view of the seventh embodiment of the tire profile along line B-B of Fig. 1,
Fig. 48: is a schematic cut sectional top view of the seventh embodiment of the tire profile along line C-C of Fig. 1,
Fig. 49: is a schematic cut sectional top view of the seventh embodiment of the tire profile along line D-D of Fig. 1,
Fig. 50: is a schematic cut sectional side view of the seventh embodiment of the tire profile along line E-E of Fig. 46,
Fig. 51: is a schematic cut sectional side view of the seventh embodiment of the tire profile along line F-F of Fig. 46,
Fig. 52: is a schematic cut sectional top view of a eighth embodiment of a tire profile along line A-A of Fig. 1,
Fig. 53: is a schematic cut sectional top view of the eighth embodiment of the tire profile along line B-B of Fig. 1,
Fig. 54: is a schematic cut sectional top view of the eighth embodiment of the tire profile along line C-C of Fig. 1,
Fig. 55: is a schematic cut sectional top view of the eighth embodiment of the tire profile along line D-D of Fig. 1,
Fig. 56: is a schematic cut sectional side view of the eighth embodiment of the tire profile along line E-E of Fig. 52,
Fig. 57: is a schematic cut sectional side view of the eighth embodiment of the tire profile along line F-F of Fig. 52 and
Fig. 58: is diagram showing the stiffness of the tire profile according to the invention in comparison to a known tire profile.

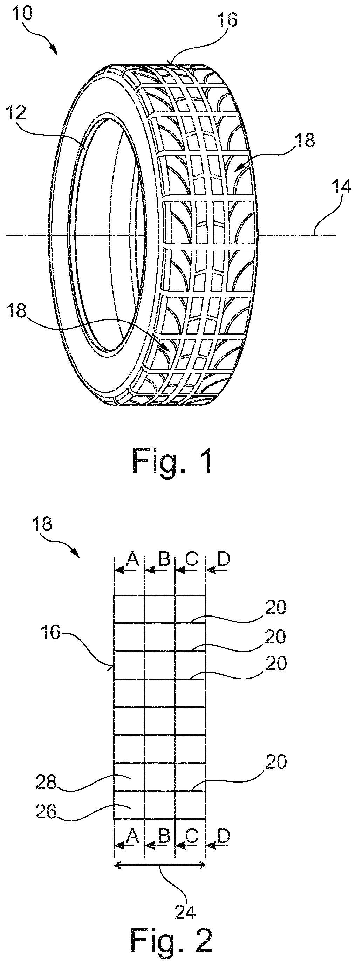

The tire 10 as illustrated in Fig. 1 comprises a connecting part 12 be means of which the tire 10 can be connected to a tire rim auf a wheel of an automobile. The tire 10 is rotatable around a turning axis 14. The tire 10 comprises at its radial outer end a running surface 16 provided by a plurality of tire profiles 18 arranged at different regions of the outer curved surface area of the tire 10. In the illustrated embodiment the tire 10 is a directional tire. In the alternate the tire 10 may be a non-directional tire.

As simplified illustrated in Fig. 2 the tire profile 18 may comprise a plurality of sipes 20 extending in a width direction 22 mainly parallel to the turning axis 14 and in a radial direction 24. Each sipe 20 provides a three-dimensional formed gab separating a first rubber block 26 from a second rubber block 28. The blocks 26, 28 provide the running surface 16 at its radial outer end.

In the following different embodiments for the sipes 20 of the tire profile 18 are described. For sake of clarity the sipes 20 and not the blocks 26, 28 are illustrated with hatchings. The illustrated appearance of the sipes 20 corresponds to sipe blades for use in a molding form for forming a tire 10 with the illustrated sipes 20. Further only a part of the tread portion of the tire profile 18 is illustrated.

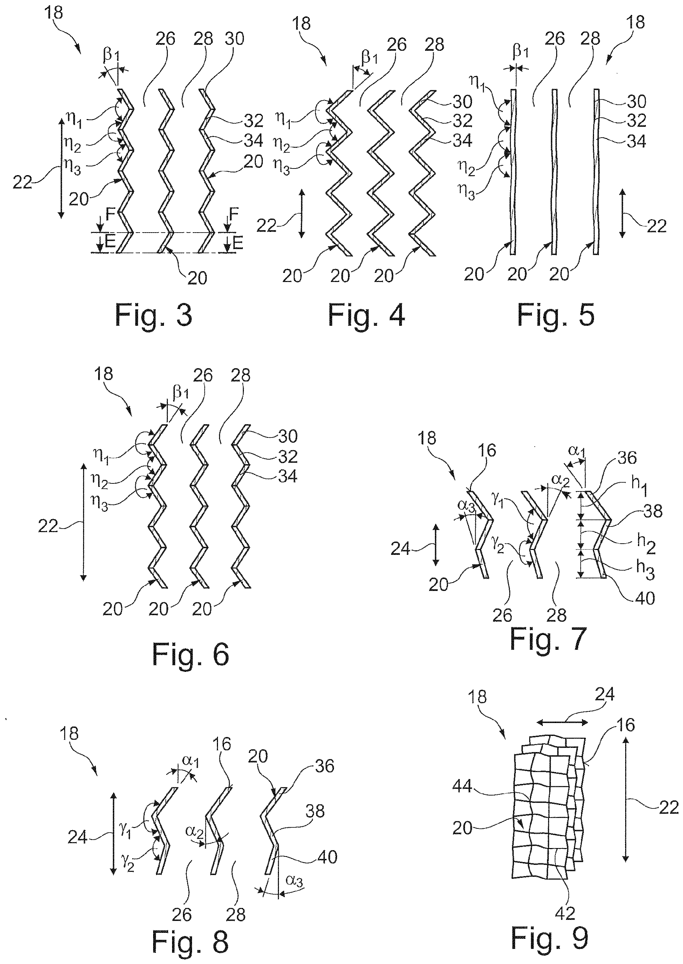

In a first embodiment of the tire profile 18 as illustrated in Fig. 3 to Fig. 9 the sipe 20 comprises a first part 30 inclined to the width direction 22 by an angle β₁. A second part 32 inclined to the width direction 22 by an angle β₂ is connected to the first part 30 via a connecting line, wherein the second part 32 is inclined to the first part 30 by an angle η₁. A third part 34 inclined to the width direction 22 by an angle β₃ is connected to the second part 32 via a connecting line, wherein the third part 34 is inclined to the second part 32 by an angle η₂ and so on. The connecting line between two adjacent parts 30, 32, 34 extends mainly in radial direction 24.

In the illustrated embodiment the amplitude of the sipes 20 perpendicular to the width direction 22 may increase (Fig. 4) and decrease (Fig. 5) depending on the depth of the sipes 20 in radial direction 24. Even the orientation of the parts 30, 32, 34 may change. For instance the angle β₁ of the first part 30 may have a positive mathematical value at the running surface 16 (Fig. 3) and a negative mathematical value at a deeper position (Fig. 4, Fig. 6), wherein a position in radial direction is present, where the angle β₁ is zero (Fig. 5). Particularly the absolute value of angle β₁ at the top (Fig. 3) may be the same as at the bottom of the sipe 20 (Fig. 6) but the sign of the mathematical value is different. The orientation of the other parts 32, 34 may change similarly so that not only the respective angle β but also the corresponding angle η changes continuously in radial direction 22.

Each part 30, 32, 34 comprises at its radial outer end a first portion 36 inclined to the radial direction 24 by an angle α₁. A second portion 38 inclined to the radial direction 24 by an angle α₂ is connected to the first portion 36 via a connecting line, wherein the second portion 38 is inclined to the first portion 36 by an angle γ₁. If so, a third portion 40 inclined to the radial direction 24 by an angle α₃ is connected to the second portion 38 via a connecting line, wherein the third portion 40 is inclined to the second portion 38 by an angle γ₂ and so on. The connecting line between two adjacent portions 36, 38, 40 extends mainly in width direction 22.

In the illustrated embodiment the amplitude of the sipes 20 perpendicular to the radial direction 24 may change depending on the position in width direction 22 along the extension of the respective part 30, 32, 34 of the sipes 20. Even the orientation of the portions 36, 38, 40 may change. For instance the angle α₁ of the first portion 36 may have a positive mathematical value at one connecting line between two adjacent part s 30, 32, 34 (Fig. 7) and a negative mathematical value at the other connecting line of the respective part 30, 32, 34 (Fig. 8), wherein a position in width direction of the respective part 30, 32, 34 is present, where the angle α₁ is zero. Particularly the absolute value of angle α₁ at the one connecting line (Fig. 7) may be the same as at the other connecting line (Fig. 8) but the sign of the mathematical value is different. The orientation of the other portions 38, 40 may change similarly so that not only the respective angle α but also the corresponding angle γ changes continuously in width direction 24 along the respective part 30, 32, 34 of the sipe 20. The first portion 36 comprises a height h₁ in radial direction, wherein the second portion 38 comprises a height h₂ in radial direction and the third portion 40 comprises a height h₃ in radial direction. The heights h remain constant in width direction 22, which means that the connecting lines between subsequent portions 36, 38, 40 stay at a particular height in radial direction 24.

The irregular course, particularly zig-zag course, of the sipes 20 in width direction 22 as well as in radial direction 22 with continuously changing angles η and γ leads to a three-dimensional shape surface of the blocks 26, 28. The blocks 26, 28 comprise a plurality of protrusions 42 and depressions 44 formed by the sipes 20, wherein the protrusions 42 and depressions 44 of two adjacent blocks 26, 28 points to each other. Due to the protrusions 42 and depressions 44 of the opposing blocks 26, 28 the blocks 26, 28 may easily engage with each other leading to an increased stiffness of the tire 10 comprising such kind of a tire profile 18.

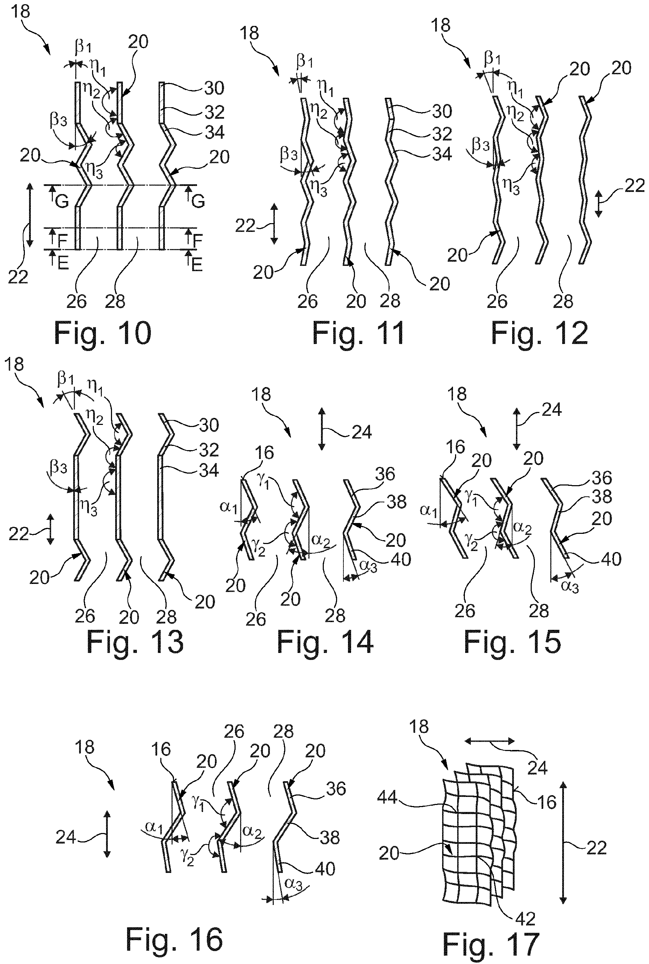

In a second embodiment of the tire profile 18 as illustrated in Fig. 10 to Fig. 17 the amplitude of the sipes 20 perpendicular to the width direction 22 is different along the extension of the sipe 20 in width direction 22. Particularly, angle β₁ may be zero and angle β₃ different from zero at the top (Fig. 10). In addition angle η₁ is 180° and angle η₃ is different to 180°. This leads to a design of the sipe 20 comprising a straight part constituted by the first part 30 and the second part 32 and a zig-zag part constituted by the third part 34 an a further subsequent part. The absolute value of angle β₁ increases and the absolute value of angle β₃ decreases from the running surface 16 radially inwards (Fig. 11, Fig. 12) until angle β₃ may be zero and angle β₁ different from zero at the bottom (Fig. 13). In addition angle η₃ is 180° and angle η₁ is different to 180°. The part of sipe 20 with a straight course at the top may comprise a zig-zag cours at the bottom, wherein at the same time part of sipe 20 with a zig-zag course at the top may comprise a straigth cours at the bottom. The amplitude of the sipe 20 at one part may change from zero to its maximum amplitude, wherein the amplitude of the sipe 20 at another part may changes from its maximum amplitude to zero. Further it is possible, that the amplitude of the sipe 20 changes from its maximum amplitude to zero and further to the opposite site with a kind of "negative amplitude". As illustrated in Fig. 14 to Fig. 16 the orientation of the parts 36, 38, 40 may change within the straight part of the sipe 20 as well as in the zig-zag part of the sipe 20. This means the angle β and/or the angle γ may change continuously within a part 30, 32, 34 of the sipe 20. This leads to protrusions 42 and depressions 44 in the opposing blocks 26, 28 as illustrated in Fig. 17 so that the blocks 26, 28 may easily engage with each other leading to an increased stiffness of the tire 10 comprising such kind of a tire profile 18.

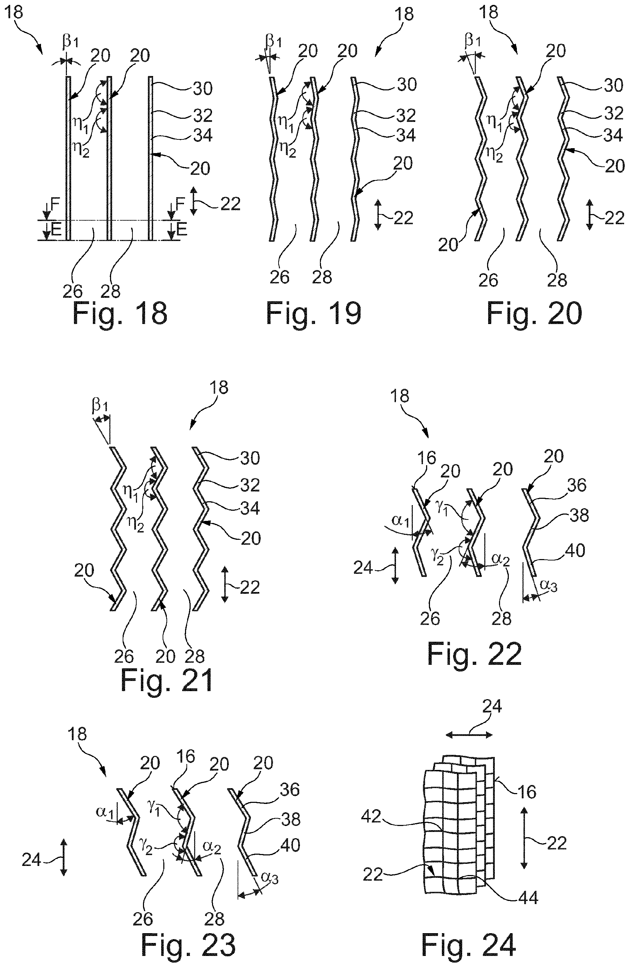

In a third embodiment of the tire profile 18 as illustrated in Fig. 18 to Fig. 24 compared to the second embodiment the sipe 20 may comprise a straight course over the whole extension in width direction at the top (Fig. 18), wherein the amplitude of the sipes 20 perpendicular to the width direction 22 increases (Fig. 19, Fig. 20) until the maximum amplitude is reached at the bottom forming a zig-zag course (Fig. 21). Further it is possible, that the amplitude of the sipe 20 changes from its maximum amplitude to zero and further to the opposite site with a kind of "negative amplitude" in a direction radially inwards and/or radially outwards. Again, as illustrated in Fig. 22 and Fig. 23 the orientation of the parts 36, 38, 40 may change within the respective part 30, 32, 34 of the sipe 20. This means the angle β and/or the angle γ may change continuously within a part 30, 32, 34 of the sipe 20. This leads to protrusions 42 and depressions 44 in the opposing blocks 26, 28 as illustrated in Fig. 24 so that the blocks 26, 28 may easily engage with each other leading to an increased stiffness of the tire 10 comprising such kind of a tire profile 18.

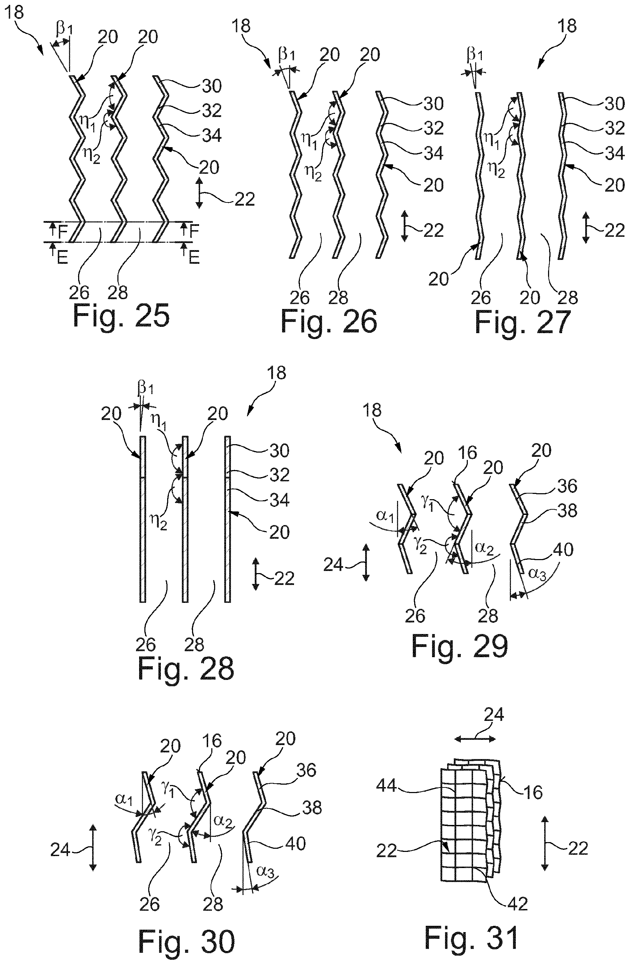

In a forth embodiment of the tire profile 18 as illustrated in Fig. 25 to Fig. 31 compared to the third embodiment the sipe 20 may comprise a zig-zag course over the whole extension in width direction at the top (Fig. 25), wherein the amplitude of the sipes 20 perpendicular to the width direction 22 decreases (Fig. 26, Fig. 27) until the amplitude is zero at the bottom forming a straight course (Fig. 28). Further it is possible, that the amplitude of the sipe 20 changes from its maximum amplitude to zero and further to the opposite site with a kind of "negative amplitude" in a direction radially inwards and/or radially outwards. Again, as illustrated in Fig. 29 and Fig. 30 the orientation of the parts 36, 38, 40 may change within the respective part 30, 32, 34 of the sipe 20. This means the angle β and/or the angle γ may change continuously within a part 30, 32, 34 of the sipe 20. This leads to protrusions 42 and depressions 44 in the opposing blocks 26, 28 as illustrated in Fig. 31 so that the blocks 26, 28 may easily engage with each other leading to an increased stiffness of the tire 10 comprising such kind of a tire profile 18.

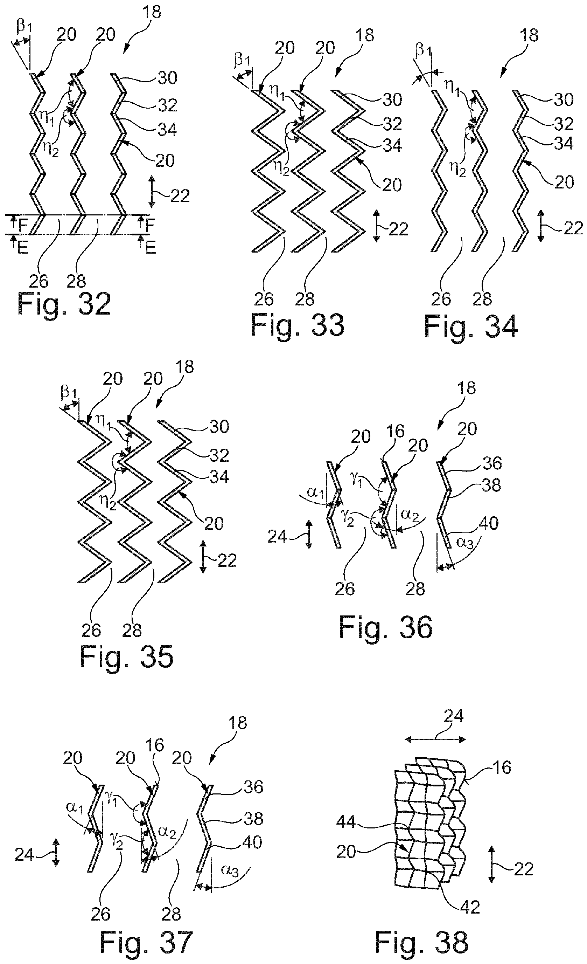

In a fifths embodiment of the tire profile 18 as illustrated in Fig. 32 to Fig. 38 the sipes 20 may comprise a low amplitude perpendicular to the width direction 22 (Fig. 32), which may increase to its maximum amplitude (Fig. 33). From this position in radial direction 24 the amplitude may decrease until an amplitude corresponding to the amplitude at the top (Fig. 34) and increasing again to its maximum amplitude at the bottom (Fig. 35). In the alternate the amplitude of the sipes 20 perpendicular to the width direction 22 may be at its maximum at the top decrease to its minimum value above zero, increases again to its maximum value and decreases again to its minimum value at the bottom. In these embodiments the value of the low amplitude is higher than zero so that a straight part of the sipe 20 in width direction is avoided. In the illustrated embodiments the maximum value and the minimum vale of the amplitude is reached twice. However, it is possible that these values are reached more often or less, particularly the change between a decreasing and an increasing amount of the value of the amplitude may take place at different values of the amplitude.

Further the amplitude of the sipes 20 perpendicular to the radial direction 24 may change depending on the position in width direction 22 along the extension of the respective part 30, 32, 34 of the sipes 20. Even the orientation of the portions 36, 38, 40 may change. For instance the angle α₁ of the first portion 36 may have a positive mathematical value at one connecting line between two adjacent part s 30, 32, 34 (Fig. 36) and a negative mathematical value at the other connecting line of the respective part 30, 32, 34 (Fig. 37), wherein a position in width direction of the respective part 30, 32, 34 is present, where the angle α₁ is zero. Particularly the absolute value of angle α₁ at the one connecting line (Fig. 36) may be the same as at the other connecting line (Fig. 37) but the sign of the mathematical value is different. The orientation of the other portions 38, 40 may change similarly so that not only the respective angle α but also the corresponding angle γ changes continuously in width direction 24 along the respective part 30, 32, 34 of the sipe 20. This means the angle β and/or the angle γ may change continuously within a part 30, 32, 34 of the sipe 20. This leads to protrusions 42 and depressions 44 in the opposing blocks 26, 28 as illustrated in Fig. 38 so that the blocks 26, 28 may easily engage with each other leading to an increased stiffness of the tire 10 comprising such kind of a tire profile 18.

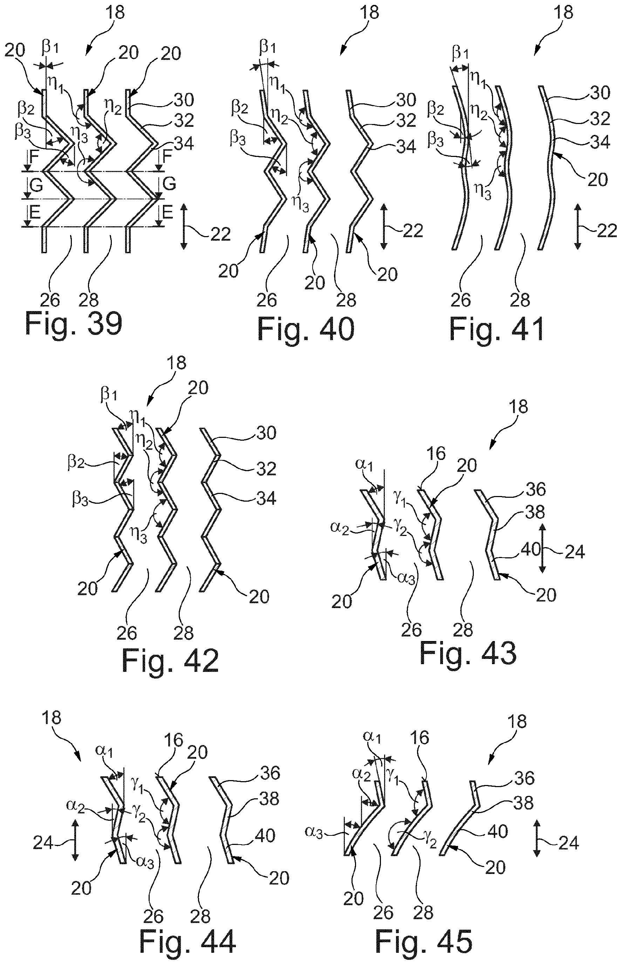

In a sixth embodiment of the tire profile 18 as illustrated in Fig. 39 to Fig. 45 the first part 30 of the sipes 20 is oriented straight in width direction 22 with an angle β₁ = 0° at the top (Fig. 39), wherein the second part 32 and the third part 34 are arranged in a zig-zag course. In the alternate a pure zig-zag course or a pure straight course may be provided at the top. The angles β₁ changes in a direction radially inwards such that the first part 30 and the second part 32 do not provide a zig-zag course but are oriented in the same direction perpendicular to the width direction 40 (Fig. 40, Fig. 41). The mathematical value of the angles β₁ and β₂ comprise a different absolute vale but the same sign. In addition the angles β₂ and β₃ change its sign from the top to the bottom in radial direction 24 so that at the bottom a pure zig-zag course is provided (Fig. 42).

Also in side view the sipes may comprise a course which is not a pure zig-zag course. For example the first portion 36, the second portion 38 and the third portion 40 may be arranged in a pure zig-zag course (Fig. 43), wherein the angles α₁, α₂ and α₃ change differently in width direction until a course is reached, where the mathematical value of angles α₁ and α₂ and/or the mathematical value of angles α₂ and α₃, as illustrated in Fig. 45, may comprise the same sign. From this position in width direction 22 the course may change back to a pure zig-zag course in radial direction 24 (Fig. 44) and so on.

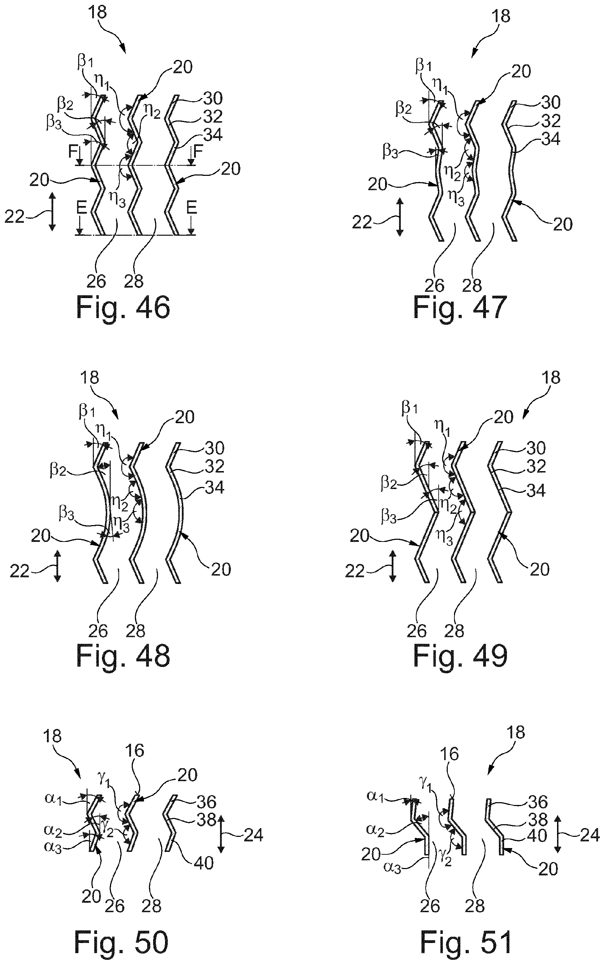

In a seventh embodiment of the tire profile 18 as illustrated in Fig. 46 to Fig. 51 the sipes 20 comprise a pure zig-zag course in width direction 22. The angles β₁, β₂ and β₃ change differently in a direction radially inwards (Fig. 47, Fig. 48) until the mathematical value of the angles β₁ and β₂ or the mathematical value of the angles β₂ and β₂ is the same (Fig. 49). In the illustrated embodiment the second part 32 and the third part 34 are inclined to the width direction by the same angle so that η₂ is 180°. The second part 32 and the third part 34 are arranged in one line inclined to the width direction 22. Due to this alignment of the portions 30, 32, 34 the sipe 20 may comprise a doubled amplitude over a halved frequency in a part of the extension of the sipe in width direction 22 at the bottom or in the alternate at the top or between. As illustrated in Fig. 50 and Fig. 51 the course of the sipe 20 in radial direction 24 may be a zig-zag course, wherein the angels α₁, α₂ and α₃ as well as the angles γ₁, γ₂ and γ₃ change continuously in width direction 22.

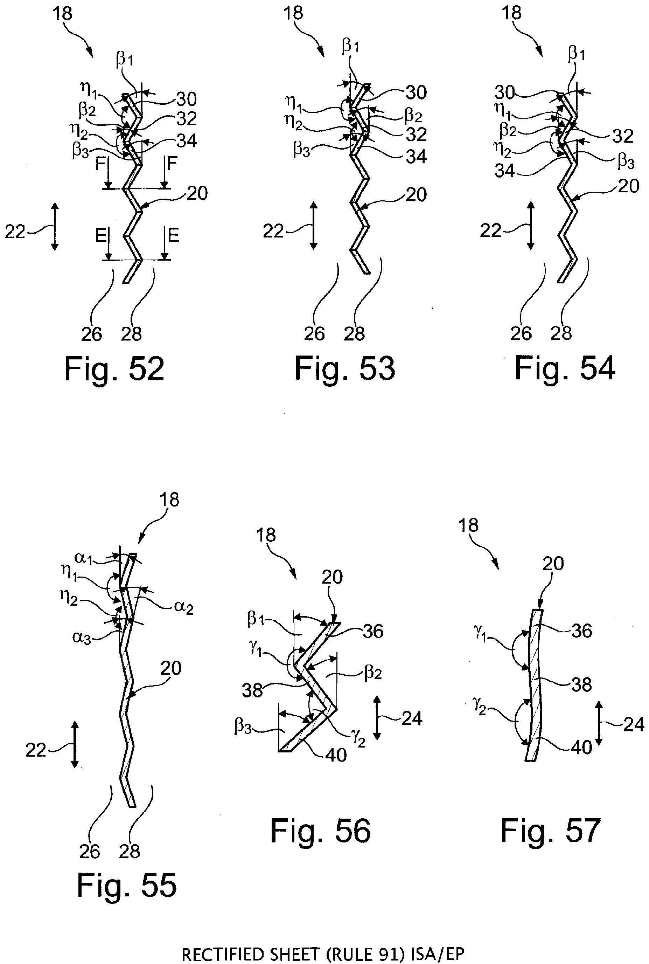

In a eighth embodiment of the tire profile 18 as illustrated in Fig. 52 to Fig. 57 the sipes 20 the sign of the mathematical value of the angels β₁, β₂ and β₃ changes several times in radial direction 24 (Fig. 52, Fig. 53, Fig. 54, Fig. 55). At the same time the amplitude of the sipe 20 in width direction may change continuously, particularly between a zig-zag course (Fig. 56) and a mainly straight course (Fig. 57). Particularly the sign of the mathematical value of the angels α₁, α₂ and α₃ changes in width direction.

Particularly it is possible to combine the course of the sipe 20 in width direction 22 of one embodiment with a course the sipe 20 in radial direction 24 of another embodiment. Further is possible using the above mentioned tire profiles 18 for a directional tire and/or a non-directional tire.

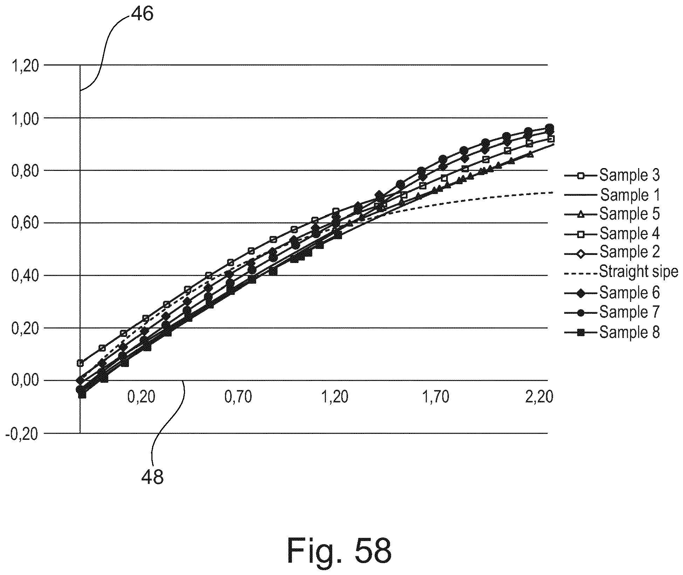

In Fig. 58 the behavior of the above mentioned embodiments of the tire profile 18 with respect to its stiffness is compared with a usual tire profile 18 comprising straight sipes with a straight course in radial direction 24 and width direction 22. A normalized longitudinal force 46 is shown over a displacement 48 in mm. The normalized force is the ratio of the applied forced to a given maximum force of 60 N. The illustrated curves are the results of a computer simulation of a box-shaped part of a tire profile 18 of 20 mm x 20 mm x 11 mm based on a nonlinear numerical simulation using a commercial FEA package. The block geometry of the tire profile 18 was meshed was meshed with finite elements. A base surface which attached to the tire profile 18 was fixed and pressed to a rigid flat road surface with a pressure of 0.25 MPa at the running surface 16. A constant coefficient of friction between the road surface and the tire profile 18 was assigned. Different tangential forces are applied to the tire profile and simulated which displacement takes place when road surface shears the simulated block geometry of the tire profile 18. The curve of "Sample 1" corresponds to the first embodiment of the tire profile 18 illustrated in Fig. 3 to 9. The curve of "Sample 2" corresponds to the second embodiment of the tire profile 18 illustrated in Fig. 10 to 17. The curve of "Sample 3" corresponds to the third embodiment of the tire profile 18 illustrated in Fig. 18 to 24. The curve of "Sample 4" corresponds to the forth embodiment of the tire profile 18 illustrated in Fig. 25 to 31. The curve of "Sample 5" corresponds to the fifth embodiment of the tire profile 18 illustrated in Fig. 31 to 38. The curve of "Sample 6" corresponds to the sixth embodiment of the tire profile 18 illustrated in Fig. 39 to 45. The curve of "Sample 7" corresponds to the sebenth embodiment of the tire profile 18 illustrated in Fig. 46 to 51. The curve of "Sample 8" corresponds to the eigth embodiment of the tire profile 18 illustrated in Fig. 51 to 57. The curve of "Straight sipe" corresponds to a tire profile according to the prior art comprising straight sipes with a straight course in radial direction 24 and width direction 22. It can derived from the diagram illustrated in Fig. 58 that particular at higher forces the tire profiles 18 according to the invention comprise a significant lower displacement leading to a higher stiffness at high loads. Hence, the tire profiles 18 according to the invention comprise a better grip than a tire profile with straight sipes.

## Claims

1. Tire profile of a pneumatic tire (10) of an automobile, said tire profile comprising a tread portion comprising at least one sipe (20), the sipe (20) comprising an extension in a width direction (22) and a depth in a radial direction (24),
wherein the sipe (20) comprises a first portion (36), a second portion (38) arranged radially inward of the first portion (36) and at least one further portion (40), wherein the further portion (40) is connected to a portion arranged above the further portion (40) in the radial direction at their connecting line,
wherein the sipe (20) comprises a first part (30), a second part (32) arranged directly besides the first part (30) in the width direction (22) and at least one third part (34) directly adjacent to the second part (32) in the width direction (22),
**characterized in that**
the first part (30) is inclined to the width direction (22) by an acute angle β₁, the second part (32) is inclined to the width direction (22) by an acute angle β₂ different to β₁ and the third part (34) is inclined to the width direction (22) by an acute angle β₃ different to β₁ and different to β₂, wherein the mathematical values of β₁ and β₂ are both positive or negative along at least a part of the radial direction (24) and/or the mathematical values of β₂ and β₃ are both positive or negative along at least a part of the radial direction (24),
wherein the first part (30) and the second part (32) are inclined to each other along their connecting line by an angle η₁, wherein the second part (32) and the third part (34) are inclined to each other along their connecting line by an angle η₂, wherein the angle η₁ and/or the angle η₂ changes along the width direction (22) continuously in a range of 90° ≤ η₁ ≤ 300° and/or in a range of 90° ≤ η₂ ≤ 300°.

2. Tire profile according to claim 1 wherein the first portion (36) is inclined to the radial direction (24) by an acute angle α₁, the second portion (38) is inclined to the radial direction (24) by an acute angle α₂ different to α₁ and the further portion (40) is inclined to the radial direction (24) by an acute angle αₓ different to α₁ and different to α₂, wherein the mathematical values of α₁ and α₂ are both positive or negative along at least a part of the width direction (22) and/or the mathematical values of α₂ and αₓ are both positive or negative along at least a part of the width direction (22).

3. Tire profile according to claim 1 or 2 wherein the first portion (36) and the second portion (38) are inclined to each other along their connecting line by an angle γ₁ and the further portion (40) is inclined to the portion arranged adjacent to the further portion (40) by an angle γₓ, wherein the angle γ₁ and/or the angle γₓ changes along the width direction (22) continuously.

4. Tire profile according to claim 3 wherein an amount of the change of the angle γ₁ and at least one angle γₓ in the width direction (22) and/or the sign of the change of the angle γ₁ and at least one angle γₓ along the width direction (22) is different.

5. Tire profile according to claim 3 or 4 wherein at least one angle γ changes at least along a part of the extension of the sipe (20) in the width direction (22) in a range of 40° ≤ γ ≤ 300°, particularly 90° ≤ γ ≤ 270°, preferably 135° ≤ γ ≤ 225° and/or in a range of 40° ≤ γ ≤ 180°, particularly 90° ≤ γ ≤ 180°, preferably 135° ≤ γ ≤ 180°.

6. Tire profile according to anyone of claims 1 to 5 wherein the absolute value of an acute angle at the connecting line between the first portion (36) and the second portion (38) and an acute angle at the connecting line between the second portion (38) and the further portion (40) is different at a discrete position in the width direction (22).

7. Tire profile according to anyone of claims 1 to 6 wherein a plurality of portions (36, 38, 40) arranged one after another in the radial direction is provided, wherein one end of each portion (36, 38, 40) is arranged on a basic line in the radial direction (24) and the other end of each portion is arranged spaced to the basic line by an amplitude, wherein the amplitude is constant for each portion (36, 38, 40) at at least one discrete position in the width direction (22) and/or the amplitude is different for different portions at least partially in the width direction (22).

8. Tire profile according to anyone of claims 1 to 7 wherein an amount of the change of the angle η₁ and at least one angle ηₓ in the width direction (22) and/or the sign of the change of the angle η₁ and at least one angle ηₓ along the width direction (22) is different.

9. Tire profile according to anyone of claims 1 to 8 wherein the absolute value of an acute angle at the connecting line between the first part (30) and the second part (32) and an acute angle at the connecting line between the second part (32) and the third part (34) is different at a discrete position in the radial direction (24).

10. Tire profile according to anyone of claims 1 to 9 wherein a plurality of parts (30, 32, 34) arranged one after another in the width direction (22) is provided, wherein one end of each part (30, 32, 34) is arranged on a basic line in the width direction (22) and the other end of each part (30, 32, 34) is arranged spaced to the basic line by an amplitude, wherein the amplitude is constant for each part at at least one discrete position in the radial direction (24) and/or the amplitude is different for different parts (30, 32, 34) at least partially in the radial direction (24).

11. Tire profile according to anyone of claims 1 to 10 wherein a plurality of parts (30, 32, 34) arranged one after another in the width direction (22) is provided, wherein one end of each part (30, 32, 34) is arranged on a basic line in the width direction (22) and the other end of each part (30, 32, 34) is arranged spaced to the basic line by an amplitude, wherein over at least one height in the radial direction (24) the amplitude protrudes in one circumferential direction and in at least one other height in the radial direction (24) in an opposite circumferential direction for at least a part of the parts (30, 32, 34).

12. Tire profile according to anyone of claims 1 to 11 wherein the sipe (20) comprises a mainly constant gap thickness along the width direction (22) and along the radial direction (24) in an unstressed state.

13. Tire profile according to anyone of claims 1 to 12 wherein the first portion (36) comprises a height h₁ in the radial direction (24), the second portion (38) comprises a height h₂ in the radial direction (24) and, if so, the further portion (40) comprises a height hₓ in the radial direction (24), wherein the heights h₁, h₂ and/or hₓ are mainly constant along the width direction (22).

14. Tire profile according to anyone of claims 1 to 9 wherein the tread portion comprises a first block (26) providing a first running surface (16) at its radially outer end and a second block (28) providing a second running surface (16) at its radially outer end, wherein the first block (26) is arranged at a distance to the second block (28) by the sipe (20), wherein the first block (26) forms a depression (44) opened towards the second block (28), wherein the second block (28) forms a protrusion (42) protruding partially into the depression (44) of the first block (26).

15. Pneumatic tire for an automobile comprising a connecting part for being connected to a tire rim of a wheel of the automobile and a tire profile (18) according to anyone of claims 1 to 14 for running the automobile along an underground.

16. Wheel for an automobile, said wheel comprising a tire rim for being connected to an axle of the automobile and a pneumatic tire (10) according to claim 15 connected to the tire rim.

17. Sipe blade for a molding form for vulcanizing a green tire to become a tire (10) comprising a tire profile (18) according to anyone of claims 1 to 14, said sipe blade comprising
a first blade portion forming a first portion (36) of a sipe (20) extending mainly in the radial direction (24) of the tire (10),
a second blade portion forming a second portion (38) of the sipe (20) connected to the first portion (36) radially inward of the first portion (36),
a third blade portion forming a further portion (40) of the sipe (20) connected to the first portion (36) radially inward of the second portion (38),
wherein the first blade portion, the second blade portion and the third blade portion form a first blade part forming a first part (30) of the sipe (20) extending mainly in the width direction (22) of the tire (10),
a second blade part forming a second part (32) of the sipe (20) extending mainly in the width direction (22), wherein the second blade part is connected to the first blade part, and
a third blade part forming a third part (32) of the sipe (20) extending mainly in the width direction (22), wherein the third blade part is connected to the second blade part, **characterized in that**
the first blade part is inclined to the width direction (22) by an acute angle β_{1'}, the second blade part is inclined to the width direction (22) by an acute angle β_{2'} different to β_{1'} and the third blade part is inclined to the width direction (22) by an acute angle β_{3'} different to β_{1'} and different to β_{2'}, wherein the mathematical values of β_{1'} and β_{2'} are both positive or negative at least partially along the radial direction (24) and/or the mathematical values of β_{2'} and β_{3'} are both positive or negative at least partially along the radial direction (24),
wherein the first blade portion and the second blade portion are designed such that the first part (30) and the second part (32) are inclined to each other along their
connecting line by an angle η₁, wherein the second part (32) and the third part (34) are inclined to each other along their connecting line by an angle η₂, wherein the angle η₁ and/or the angle η₂ changes along the width direction (22) continuously in a range of 90° ≤ η₁ ≤ 300° and/or in a range of 90° ≤ η₂ ≤ 300°.

18. Molding form for vulcanizing a green tire to become a tire (10), said molding form comprising a tire profile (18) according to anyone of claims 1 to 14, comprising a mold casing for receiving a rubber material and
at least one sipe blade according to claim 17 protruding radially inwards from the mold casing forming sipes (20) into the rubber material.

## Patentansprüche

1. Reifenprofil eines Luftreifens (10) eines Kraftfahrzeugs, wobei das Reifenprofil Folgendes umfasst:
einen Laufflächenabschnitt, der zumindest eine Einschnitt-Lamelle (20) umfasst, wobei die Einschnitt-Lamelle (20) eine Erstreckung in einer Breitenrichtung (22) und eine Tiefe in einer radialen Richtung (24) umfasst,
wobei die Einschnitt-Lamelle (20) einen ersten Abschnitt (36), einen vom ersten Abschnitt (36) radial nach innen angeordneten zweiten Abschnitt (38) und zumindest einen weiteren Abschnitt (40) umfasst, wobei der weitere Abschnitt (40) mit einem Abschnitt verbunden ist, der in der radialen Richtung an ihrer Verbindungslinie über dem weiteren Abschnitt (40) angeordnet ist,
wobei die Einschnitt-Lamelle (20) einen ersten Teil (30), einen in der Breitenrichtung (22) direkt neben dem ersten Teil (30) angeordneten zweiten Teil (32) und zumindest einen in der Breitenrichtung (22) direkt an den zweiten Teil (32) angrenzenden dritten Teil (34) umfasst,
**dadurch gekennzeichnet, dass**
der erste Teil (30) zur Breitenrichtung (22) um einen spitzen Winkel β₁ geneigt ist, wobei der zweite Teil (32) zur Breitenrichtung (22) um einen spitzen Winkel β₂, der sich von β₁ unterscheidet, geneigt ist und der dritte Teil (34) zur Breitenrichtung (22) um einen spitzen Winkel β₃, der sich von β₁ und von β₂ unterscheidet, geneigt ist, wobei die mathematischen Werte von β₁ und β₂ entlang zumindest eines Teils der radialen Richtung (24) beide positiv oder negativ sind und/oder wobei die mathematischen Werte von β₂ und β₃ entlang zumindest eines Teils der radialen Richtung (24) beide positiv oder negativ sind,
wobei der erste Teil (30) und der zweite Teil (32) entlang ihrer Verbindungslinie um einen Winkel η₁ zueinander geneigt sind, wobei der zweite Teil (32) und der dritte Teil (34) entlang ihrer Verbindungslinie um einen Winkel η₂ zueinander geneigt sind, wobei sich der Winkel η₁ und/oder der Winkel η₂ entlang der Breitenrichtung (22) in einem Bereich von 90° ≤ η₁ ≤ 300° und/oder in einem Bereich von 90° ≤ η₂ ≤ 300° kontinuierlich verändern.

2. Reifenprofil nach Anspruch 1, wobei der erste Abschnitt (36) zur radialen Richtung (24) um einen spitzen Winkel α₁ geneigt ist, wobei der zweite Abschnitt (38) zur radialen Richtung (24) um einen spitzen Winkel α₂, der sich von α₁ unterscheidet, geneigt ist, und wobei der weitere Abschnitt (40) zur radialen Richtung (24) um einen spitzen Winkel αₓ, der sich von α₁ und von α₂ unterscheidet, geneigt ist, wobei die mathematischen Werte von α₁ und α₂ entlang zumindest eines Teils der Breitenrichtung (22) beide positiv oder negativ sind und/oder wobei die mathematischen Werte von α₂ und αₓ entlang zumindest eines Teils der Breitenrichtung (22) beide positiv oder negativ sind.

3. Reifenprofil nach Anspruch 1 oder 2 wobei der erste Abschnitt (36) und der zweite Abschnitt (38) entlang ihrer Verbindungslinie um einen Winkel γ₁ zueinander geneigt sind und wobei der weitere Abschnitt (40) zu dem Abschnitt, der an den weiteren Abschnitt (40) angrenzend angeordnet ist, um einen Winkel γₓ geneigt ist, wobei sich der Winkel γ₁ und/oder der Winkel γₓ entlang der Breitenrichtung (22) kontinuierlich ändern.

4. Reifenprofil nach Anspruch 3, wobei ein Maß der Änderung des Winkels γ₁ und zumindest eines Winkels γₓ in der Breitenrichtung (22) und/oder das Vorzeichen der Änderung des Winkels γ₁ und zumindest eines Winkels γₓ entlang der Breitenrichtung (22) unterschiedlich sind.

5. Reifenprofil nach Anspruch 3 oder 4, wobei sich zumindest ein Winkel γ zumindest entlang eines Teils der Erstreckung der Einschnitt-Lamelle (20) in der Breitenrichtung (22) in einem Bereich von 40° ≤ γ ≤ 300°, insbesondere 90° ≤ γ ≤ 270°, vorzugsweise 135° ≤ γ ≤ 225° und/oder in einem Bereich von 40° ≤ γ ≤ 180°, insbesondere 90° ≤ γ ≤ 180°, vorzugsweise 135° ≤ γ ≤ 180°, ändert.

6. Reifenprofil nach einem der Ansprüche 1 bis 5, wobei der Absolutwert eines spitzen Winkels an der Verbindungslinie zwischen dem ersten Abschnitt (36) und dem zweiten Abschnitt (38) und eines spitzen Winkels an der Verbindungslinie zwischen dem zweiten Abschnitt (38) und dem weiteren Abschnitt (40) an einer diskreten Position in der Breitenrichtung (22) unterschiedlich ist.

7. Reifenprofil nach einem der Ansprüche 1 bis 6, wobei mehrere Abschnitte (36, 38, 40) bereitgestellt sind, die in der radialen Richtung hintereinander angeordnet sind, wobei ein Ende jedes Abschnitts (36, 38, 40) in der radialen Richtung (24) auf einer Grundlinie angeordnet ist und das andere Ende jedes Abschnitts um eine Amplitude von der Grundlinie beabstandet angeordnet ist, wobei die Amplitude für jeden Abschnitt (36, 38, 40) an zumindest einer diskreten Position in der Breitenrichtung (22) konstant ist und/oder wobei die Amplitude für verschiedene Abschnitte zumindest teilweise in der Breitenrichtung (22) unterschiedlich ist.

8. Reifenprofil nach einem der Ansprüche 1 bis 7, wobei ein Maß der Änderung des Winkels η₁ und zumindest eines Winkels ηₓ in der Breitenrichtung (22) und/oder das Vorzeichen der Änderung des Winkels η₁ und zumindest eines Winkels ηₓ entlang der Breitenrichtung (22) unterschiedlich sind.

9. Reifenprofil nach einem der Ansprüche 1 bis 8, wobei der Absolutwert eines spitzen Winkels an der Verbindungslinie zwischen dem ersten Teil (30) und dem zweiten Teil (32) und eines spitzen Winkels an der Verbindungslinie zwischen dem zweiten Teil (32) und dem dritten Teil (34) an einer diskreten Position in der radialen Richtung (24) unterschiedlich ist.

10. Reifenprofil nach einem der Ansprüche 1 bis 9, wobei mehrere Teile (30, 32, 34) bereitgestellt sind, die in der Breitenrichtung (22) hintereinander angeordnet sind, wobei ein Ende jedes Teils (30, 32, 34) in der Breitenrichtung (22) auf einer Grundlinie angeordnet ist und wobei das andere Ende jedes Teils (30, 32, 34) um eine Amplitude von der Grundlinie beabstandet angeordnet ist, wobei die Amplitude für jeden Teil an zumindest einer diskreten Position in der radialen Richtung (24) konstant ist und/oder wobei die Amplitude für verschiedene Teile (30, 32, 34) zumindest teilweise in der radialen Richtung (24) unterschiedlich ist.

11. Reifenprofil nach einem der Ansprüche 1 bis 10, wobei mehrere Teile (30, 32, 34) bereitgestellt sind, die in der Breitenrichtung (22) hintereinander angeordnet sind, wobei ein Ende jedes Teils (30, 32, 34) in der Breitenrichtung (22) auf einer Grundlinie angeordnet ist und wobei das andere Ende jedes Teils (30, 32, 34) um eine Amplitude von der Grundlinie beabstandet angeordnet ist, wobei die Amplitude für zumindest einen Teil der Teile (30, 32, 34) über zumindest eine Höhe in der radialen Richtung (24) in einer Umfangsrichtung und über zumindest eine andere Höhe in der radialen Richtung (24) in einer entgegengesetzten Umfangsrichtung vorsteht.

12. Reifenprofil nach einem der Ansprüche 1 bis 11, wobei die Einschnitt-Lamelle (20) in einem unbelasteten Zustand entlang der Breitenrichtung (22) und entlang der radialen Richtung (24) eine hauptsächlich konstante Spaltdicke umfasst.

13. Reifenprofil nach einem der Ansprüche 1 bis 12, wobei der erste Abschnitt (36) in der radialen Richtung (24) eine Höhe h₁ umfasst, der zweite Abschnitt (38) in der radialen Richtung (24) eine Höhe h₂ umfasst und gegebenenfalls der weitere Abschnitt (40) in der radialen Richtung (24) eine Höhe hₓ umfasst, wobei die Höhen h₁, h₂ und/oder hₓ entlang der Breitenrichtung (22) hauptsächlich konstant sind.

14. Reifenprofil nach einem der Ansprüche 1 bis 9, wobei der Laufflächenabschnitt einen ersten Block (26) umfasst, der an seinem radial äußeren Ende eine erste Lauffläche (16) bereitstellt, und einen zweiten Block (28) umfasst, der an seinem radial äußeren Ende eine zweite Lauffläche (16) bereitstellt, wobei der erste Block (26) durch die Einschnitt-Lamelle (20) in einem Abstand zum zweiten Block (28) angeordnet ist, wobei der erste Block (26) eine zum zweiten Block (28) hin geöffnete Vertiefung (44) ausbildet, wobei der zweite Block (28) einen teilweise in die Vertiefung (44) des ersten Blocks (26) vorstehenden Vorsprung (42) ausbildet.

15. Luftreifen für ein Kraftfahrzeug, umfassend einen Verbindungsteil zur Verbindung mit einer Reifenfelge eines Rads des Kraftfahrzeugs und ein Reifenprofil (18) nach einem der Ansprüche 1 bis 14 zum Fahren des Kraftfahrzeugs entlang eines Untergrunds.

16. Rad für ein Kraftfahrzeug, wobei das Rad eine Reifenfelge zur Verbindung mit einer Achse des Kraftfahrzeugs und einen mit der Reifenfelge verbundenen Luftreifen (10) nach Anspruch 15 umfasst.

17. Einschnitt-Lamellenklinge für eine Gießform zum Vulkanisieren eines Rohreifens zu einem Reifen (10), umfassend ein Reifenprofil (18) nach einem der Ansprüche 1 bis 14, wobei die Einschnitt-Lamellenklinge Folgendes umfasst:
einen ersten Klingenabschnitt, der einen ersten Abschnitt (36) einer Einschnitt-Lamelle (20) ausbildet, der sich hauptsächlich in der radialen Richtung (24) des Reifens (10) erstreckt,
einen zweiten Klingenabschnitt, der einen zweiten Abschnitt (38) der Einschnitt-Lamelle (20) ausbildet, der vom ersten Abschnitt (36) radial nach innen mit dem ersten Abschnitt (36) verbunden ist,
einen dritten Klingenabschnitt, der einen weiteren Abschnitt (40) der Einschnitt-Lamelle (20) ausbildet, der vom zweiten Abschnitt (38) radial nach innen mit dem ersten Abschnitt (36) verbunden ist,
wobei der erste Klingenabschnitt, der zweite Klingenabschnitt und der dritte Klingenabschnitt Folgendes ausbilden:
einen ersten Klingenteil, der einen ersten Teil (30) der Einschnitt-Lamelle (20) ausbildet, der sich hauptsächlich in der Breitenrichtung (22) des Reifens (10) erstreckt,
einen zweiten Klingenteil, der einen zweiten Teil (32) der Einschnitt-Lamelle (20) ausbildet, der sich hauptsächlich in der Breitenrichtung (22) erstreckt, wobei der zweite Klingenteil mit dem ersten Klingenteil verbunden ist, und
einen dritten Klingenteil, der einen dritten Teil (32) der Einschnitt-Lamelle (20) ausbildet, der sich hauptsächlich in der Breitenrichtung (22) erstreckt, wobei der dritte Klingenteil mit dem zweiten Klingenteil verbunden ist,
**dadurch gekennzeichnet, dass**
der erste Klingenteil zur Breitenrichtung (22) um einen spitzen Winkel β₁, geneigt ist, der zweite Klingenteil zur Breitenrichtung (22) um einen spitzen Winkel β_{2'}, der sich von β₁, unterscheidet, geneigt ist und der dritte Klingenteil zur Breitenrichtung (22) um einen spitzen Winkel β_{3'}, der sich von β₁, und von β_{2'} unterscheidet, geneigt ist, wobei die mathematischen Werte von β₁, und β_{2'} zumindest teilweise entlang der radialen Richtung (24) beide positiv oder negativ sind und/oder die mathematischen Werte von β_{2'} und β_{3'} zumindest teilweise entlang der radialen Richtung (24) beide positiv oder negativ sind,
wobei der erste Klingenabschnitt und der zweite Klingenabschnitt so gestaltet sind, dass der erste Teil (30) und der zweite Teil (32) entlang ihrer Verbindungslinie um einen Winkel η₁ zueinander geneigt, wobei der zweite Teil (32) und der dritte Teil (34) entlang ihrer Verbindungslinie um einen Winkel η₂ zueinander geneigt sind, wobei sich der Winkel η₁ und/oder der Winkel η₂ entlang der Breitenrichtung (22) in einem Bereich von 90° ≤ η₁ ≤ 300° und/oder in einem Bereich von 90° ≤ η₂ ≤ 300° kontinuierlich verändern.

18. Gießform zum Vulkanisieren eines Rohreifens zu einem Reifen (10), wobei die Gießform ein Reifenprofil (18) nach einem der Ansprüche 1 bis 14 umfasst, umfassend ein Formgehäuse zum Aufnehmen eines Gummimaterials und zumindest eine Einschnitt-Lamellenklinge nach Anspruch 17, die vom Formgehäuse radial nach innen vorsteht und Einschnitt-Lamelle (20) in das Gummimaterial einbringt.

## Revendications

1. Profil de pneu d'un pneumatique (10) de véhicule automobile, ledit profil de pneu comprenant une bande de roulement comprenant au moins une incision lamelle (20), l'incision lamelle (20) comprenant une étendue dans la direction de la largeur (22) et une profondeur dans une direction radiale (24),
l'incision lamelle (20) comprenant une première portion (36), une deuxième portion (38) disposée radialement vers l'intérieur de la première portion (36) et au moins une portion supplémentaire (40), la portion supplémentaire (40) étant connectée à une portion disposée au-dessus de la portion supplémentaire (40) dans la direction radiale au niveau de leur ligne de connexion,
l'incision lamelle (20) comprenant une première partie (30), une deuxième partie (32) disposée directement à côté de la première partie (30) dans la direction de la largeur (22) et au moins une troisième partie (34) directement adjacente à la deuxième partie (32) dans la direction de la largeur (22),
**caractérisé en ce que**
la première partie (30) est inclinée par rapport à la direction de la largeur (22) suivant un angle aigu β₁, la deuxième partie (32) est inclinée par rapport à la direction de la largeur (22) suivant un angle aigu β₂ différent de β₁ et la troisième partie (34) est inclinée par rapport à la direction de la largeur (22) suivant un angle aigu β₃ différent de β₁ et de β₂, les valeurs mathématiques de β₁ et de β₂ étant toutes deux positives ou négatives le long d'au moins une partie de la direction radiale (24) et/ou les valeurs mathématiques de β₂ et de β_{θ} étant toutes deux positives ou négatives le long d'au moins une partie de la direction radiale (24),
la première partie (30) et la deuxième partie (32) étant inclinées l'une par rapport l'autre le long de leur ligne de connexion suivant un angle η₁, la deuxième partie (32) et la troisième partie (34) étant inclinées l'une par rapport à l'autre le long de leur ligne de connexion suivant un angle n₂, l'angle η₁ et/ou l'angle η₂ variant le long de la direction de la largeur (22) en continu dans une plage de 90° ≤ η₁ ≤ 300° et/ou dans une plage de 90° ≤ η₂ ≤ 300°.

2. Profil de pneu selon la revendication 1, dans lequel la première portion (36) est inclinée par rapport à la direction radiale (24) suivant un angle aigu α₁, la deuxième portion (38) est inclinée par rapport à la direction radiale (24) suivant un angle aigu α₂, différent de α₁ et la portion supplémentaire (40) est inclinée par rapport à la direction radiale (24) suivant un angle aigu αₓ différent de α₁ et différent de α₂, les valeurs mathématiques de α₁ et de α₂ étant toutes deux positives ou négatives le long d'au moins une partie de la direction de la largeur (22) et/ou les valeurs mathématiques de α₂ et de αₓ étant toutes deux positives ou négatives le long d'au moins une partie de la direction de la largeur (22).

3. Profil de pneu selon la revendication 1 ou 2, dans lequel la première portion (36) et la deuxième portion (38) sont inclinées l'une par rapport à l'autre le long de leur ligne de connexion suivant un angle γ₁ et la portion supplémentaire (40) est inclinée par rapport à la portion adjacente à la portion supplémentaire (40) suivant un angle γₓ, l'angle γ₁ et/ou l'angle γₓ variant le long de la direction de la largeur (22) en continu.

4. Profil de pneu selon la revendication 3, dans lequel une quantité de la variation de l'angle γ₁ et d'au moins un angle γₓ dans la direction de la largeur (22) et/ou le signe de la variation de l'angle γ₁ et d'au moins un angle γₓ le long de la direction de la largeur (22) sont différents.

5. Profil de pneu selon la revendication 3 ou 4, dans lequel au moins un angle γ varie au moins le long d'une partie de l'extension de l'incision lamelle (20) dans la direction de la largeur (22) dans une plage de 40° ≤ γ ≤ 300°, en particulier de 90° ≤ γ ≤ 270°, de préférence de 135° ≤ γ ≤ 225° et/ou dans une plage de 40° ≤ γ ≤ 180°, en particulier de 90° ≤ γ ≤ 180°, de préférence de 135° ≤ γ ≤ 180°.

6. Profil de pneu selon l'une quelconque des revendications 1 à 5, dans lequel les valeurs absolues d'un angle aigu au niveau de la ligne de connexion entre la première portion (36) et la deuxième portion (38) et d'un angle aigu au niveau de la ligne de connexion entre la deuxième portion (38) et la portion supplémentaire (40) sont différentes au niveau d'une position discrète dans la direction de la largeur (22).

7. Profil de pneu selon l'une quelconque des revendications 1 à 6, dans lequel une pluralité de portions (36, 38, 40) disposées les unes derrière les autres dans la direction radiale sont prévues, une extrémité de chaque portion (36, 38, 40) étant disposée sur une ligne de base dans la direction radiale (24) et l'autre extrémité de chaque portion étant disposée de manière espacée d'une amplitude par rapport à la ligne de base, l'amplitude étant constante pour chaque portion (36, 38, 40) au niveau d'au moins une position discrète dans la direction de la largeur (22) et/ou l'amplitude étant différente pour différentes portions au moins en partie dans la direction de la largeur (22).

8. Profil de pneu selon l'une quelconque des revendications 1 à 7, dans lequel une quantité de la variation de l'angle η₁ et d'au moins un angle ηₓ dans la direction de la largeur (22) et/ou le signe de la variation de l'angle η₁ et d'au moins un angle ηₓ dans la direction de la largeur (22) sont différents.

9. Profil de pneu selon l'une quelconque des revendications 1 à 8, dans lequel les valeurs absolues d'un angle aigu au niveau de la ligne de connexion entre la première partie (30) et la deuxième partie (32) et d'un angle aigu au niveau de la ligne de connexion entre la deuxième partie (32) et la troisième partie (34) sont différentes au niveau d'une position discrète dans la direction radiale (24).

10. Profil de pneu selon l'une quelconque des revendications 1 à 9, dans lequel une pluralité de parties (30, 32, 34) disposées les unes derrière les autres dans la direction de la largeur (22) sont prévues, une extrémité de chaque partie (30, 32, 34) étant disposée sur une ligne de base dans la direction de la largeur (22) et l'autre extrémité de chaque partie (30, 32, 34) étant disposée de manière espacée d'une amplitude par rapport à la ligne de base, l'amplitude étant constante pour chaque partie au niveau d'au moins une position discrète dans la direction radiale (24) et/ou l'amplitude étant différente pour différentes parties (30, 32, 34) au moins en partie dans la direction radiale (24).

11. Profil de pneu selon l'une quelconque des revendications 1 à 10, dans lequel une pluralité de parties (30, 32, 34) disposées les unes derrière les autres dans la direction de la largeur (22) sont prévues, une extrémité de chaque partie (30, 32, 34) étant disposée sur une ligne de base dans la direction de la largeur (22) et l'autre extrémité de chaque partie (30, 32, 34) étant disposée de manière espacée d'une amplitude par rapport à la ligne de base, l'amplitude saillant, sur au moins une hauteur dans la direction radiale (24), dans une direction circonférentielle et sur au moins une autre hauteur dans la direction radiale (24), dans une direction circonférentielle opposée, pour au moins une partie des parties (30, 32, 34).

12. Profil de pneu selon l'une quelconque des revendications 1 à 11, dans lequel l'incision lamelle (20) comprend une épaisseur d'espace essentiellement constante le long de la direction de la largeur (22) et le long de la direction radiale (24) dans un état non contraint.

13. Profil de pneu selon l'une quelconque des revendications 1 à 12, dans lequel la première portion (36) comprend une hauteur h₁ dans la direction radiale (24), la deuxième portion (38) comprend une hauteur h₂ dans la direction radiale (24) et, le cas échéant, la portion supplémentaire (40) comprend une hauteur hₓ dans la direction radiale (24), les hauteurs h₁, h₂ et/ou hₓ étant essentiellement constantes le long de la direction de la largeur (22).

14. Profil de pneu selon l'une quelconque des revendications 1 à 9, dans lequel la bande de roulement comprend un premier bloc (26) fournissant une première surface de roulement (16) au niveau de son extrémité radialement extérieure et un deuxième bloc (28) fournissant une deuxième surface de roulement (16) au niveau de son extrémité radialement extérieure, le premier bloc (26) étant disposé à distance du deuxième bloc (28) par l'incision lamelle (20), le premier bloc (26) formant un renfoncement (44) ouvert vers le deuxième bloc (28), le deuxième bloc (28) formant une saillie (42) faisant saillie en partie dans le renfoncement (44) du premier bloc (26).

15. Pneumatique pour un véhicule automobile comprenant une partie de connexion prévue pour être connectée à une jante de pneu d'une roue du véhicule automobile et un profil de pneu (18) selon l'une quelconque des revendications 1 à 14 pour faire rouler le véhicule automobile le long d'une chaussée.

16. Roue de véhicule automobile, ladite roue comprenant une jante de pneu prévue pour être connectée à un essieu du véhicule automobile et un pneumatique (10) selon la revendication 15, connecté à la jante de pneu.

17. Lame d'incision lamelle pour un moule de moulage pour vulcaniser un pneu vert de manière à obtenir un pneu (10) comprenant un profil de pneu (18) selon l'une quelconque des revendications 1 à 14, ladite lame d'incision lamelle comprenant
une première portion de lame formant une première portion (36) d'une incision lamelle (20) s'étendant principalement dans la direction radiale (24) du pneu (10),
une deuxième portion de lame formant une deuxième portion (38) de l'incision lamelle (20), connectée à la première portion (36) radialement vers l'intérieur de la première portion (36),
une troisième portion de lame formant une portion supplémentaire (40) de l'incision lamelle (20), connectée à la première portion (36) radialement vers l'intérieur de la deuxième portion (38),
la première portion de lame, la deuxième portion de lame et la troisième portion de lame formant une première partie de lame formant une première partie (30) de l'incision lamelle (20) s'étendant principalement dans la direction de la largeur (22) du pneu (10),
une deuxième partie de lame formant une deuxième partie (32) de l'incision lamelle (20) s'étendant principalement dans la direction de la largeur (22), la deuxième partie de lame étant connectée à la première partie de lame, et
une troisième partie de lame formant une troisième partie (32) de l'incision lamelle (20) s'étendant principalement dans la direction de la largeur (22), la troisième partie de lame étant connectée à la deuxième partie de lame,
**caractérisée en ce que**
la première partie de lame est inclinée par rapport à la direction de la largeur (22) suivant un angle aigu β_{1'}, la deuxième partie de lame est inclinée par rapport à la direction de la largeur (22) suivant un angle aigu β_{2'} différent de β_{1'}, et la troisième partie de lame est inclinée par rapport à la direction de la largeur (22) suivant un angle aigu β_{3'} différent de β_{1'} et de β_{2'}, les valeurs mathématiques de β_{1'} et de β_{2'} étant toutes deux positives ou négatives au moins en partie le long de la direction radiale (24) et/ou les valeurs mathématiques de β_{2'} et de β_{3'} étant toutes deux positives ou négatives au moins en partie le long de la direction radiale (24),
la première portion de lame et la deuxième portion de lame étant conçues de telle sorte que la première partie (30) et la deuxième partie (32) soient inclinées l'une par rapport à l'autre le long de leur ligne de connexion suivant un angle η₁, que la deuxième partie (32) et la troisième partie (34) soient inclinées l'une par rapport à l'autre le long de leur ligne de connexion suivant un angle n₂, l'angle η₁ et/ou l'angle η₂ variant le long de la direction de la largeur (22) en continu dans une plage de 90° ≤ η₁ ≤ 300° et/ou dans une plage de 90° ≤ η₂ ≤ 300°.

18. Moule de moulage pour vulcaniser un pneu vert de manière à obtenir un pneu (10), ledit moule de moulage comprenant un profil de pneu (18) selon l'une quelconque des revendications 1 à 14, comprenant un boîtier de moule pour recevoir un matériau à base de caoutchouc et
au moins une lame d'incision lamelle selon la revendication 17, faisant saillie radialement vers l'intérieur depuis le boîtier de moule, formant des incision lamelles (20) dans le matériau à base de caoutchouc.
